# FASCICULE DE BREVET EUROPEEN

(11) **EP 2 243 875 B1**
(45) Date de publication et mention de la délivrance du brevet: **19.06.2013**
(21) Numéro de dépôt: 09158352.6
(22) Date de dépôt: 21.04.2009
(51) Int. Cl.: D06F 39/00, A47L 15/42, F24C 7/08, G06F 3/03

(54) **Interface de commande manuelle comportant un boîtier amovible**
Manuelle Steuerschnittstelle mit einem abnehmbaren Gehäuse
Manual control interface comprising a removable box

(43) Date de publication de la demande: 27.10.2010
(73) Titulaire: Delphi Technologies, Inc., Troy, MI 48007 (US)
(72) Inventeur: Mahr, Christophe, 67320 Adamswiller (FR)
(74) Mandataire: Robert, Vincent

(56) Documents cités:
- EP-A- 0 725 181
- EP-A- 2 026 010
- DE-A1- 10 307 756
- DE-A1-102004 021 019
- DE-C1- 10 035 642
- DE-U1- 29 622 066
- GB-A- 2 265 158

## Description

### DOMAINE TECHNIQUE

La présente invention concerne une interface de commande manuelle, notamment pour un appareil électroménager tel qu'un lave-linge ou un lave-vaisselle.

On connaît, par example, DE 10 2004 021 019 A1 qui décrit une telle interface de commande manuelle.

### ARRIERE-PLAN TECHNOLOGIQUE DE L'INVENTION

La présente invention concerne plus particulièrement une interface de commande manuelle d'un appareil électroménager tel qu'un lave-linge qui comporte une façade munie d'un écran d'affichage et d'une interface de commande manuelle. L'écran, généralement du type à cristaux liquides (LCD), est prévu pour afficher des informations relatives au fonctionnement de l'appareil tel que le programme de lavage choisi, la température de lavage, la durée du programme en cours, l'état d'avancement du programme en cours, etc. L'interface de commande manuelle est prévue pour permettre à un utilisateur de commander manuellement des fonctions de l'appareil, notamment en vue de choisir le programme de lavage, la température de lavage, etc. L'interface de commande comprend généralement des commutateurs tels que des boutons poussoirs et des molettes de commande rotatives qui coopèrent avec un circuit électronique de commande pour agir sur les paramètres de fonctionnement de l'appareil. L'action de l'utilisateur sur les commutateurs lui permet ainsi de commander l'appareil en fonction de paramètres choisis qui peuvent être affichés sur l'écran.

Un inconvénient des appareils connus est qu'il est nécessaire de prévoir un grand nombre de commutateurs sur la façade de l'appareil pour commander toutes les fonctions ce qui nuit à l'ergonomie de l'appareil et à son aspect esthétique. En effet, plus l'appareil a de fonctions, plus la façade comporte de commutateurs. De plus, il est nécessaire de prévoir une façade distincte pour chaque type d'appareil puisque le nombre et le type de commutateur utilisé dépend du type d'appareil, notamment du nombre de ses fonctions.

La présente invention vise à proposer un appareil muni d'une interface de commande plus simple, plus facile à utiliser, et susceptible de prendre en charge tous les types d'appareil quel que soit leur nombre de fonctions.

### RESUME DE L'INVENTION

Dans ce but, l'invention propose une interface de commande manuelle prévue pour permettre à un utilisateur de commander manuellement les fonctions d'un appareil, en particulier un appareil électroménager, l'interface comportant un circuit électronique de commande et un écran d'affichage prévu pour afficher des informations relatives au fonctionnement de l'appareil, **caractérisée en ce que** :
- l'interface de commande comprend un boîtier qui est monté mobile sur un support, suivant au moins une direction privilégiée, et qui est reçu dans un réceptacle du support, de manière que le boîtier constitue un organe de commande manuelle de l'appareil,
- l'interface de commande comprend un dispositif électronique de détection qui est prévu pour détecter un mouvement du boîtier dans son réceptacle suivant la direction privilégiée et produire un premier signal représentatif de ce mouvement, ce premier signal étant traduit par le circuit électronique de commande en une instruction de commande d'une fonction de l'appareil,
- l'écran d'affichage est agencé dans le boîtier,
- le boîtier est monté de manière amovible dans le réceptacle et le boîtier comporte des moyens de communication à distance avec le circuit électronique de commande de manière que, lorsque le boîtier est retiré du réceptacle, l'écran puisse continuer à afficher les informations relatives au fonctionnement de l'appareil.

Selon d'autres caractéristiques de l'invention :
- le boîtier comporte au moins un accéléromètre qui est prévu pour produire un signal de commande déterminé lorsqu'il détecte un mouvement du boîtier dans une direction déterminée ;
- le boîtier est monté libre en rotation dans son réceptacle, et il est prévu un premier dispositif de détection produisant un premier signal qui est fonction du mouvement de rotation du boîtier dans le réceptacle autour d'un premier axe de rotation.
- il est prévu un second dispositif de détection produisant un second signal qui est fonction du mouvement de rotation du boîtier dans le réceptacle autour d'un second axe de rotation sensiblement orthogonal au premier axe de rotation ;
- l'interface comporte des moyens de motorisation du boitier qui sont commandés par le circuit électronique de commande pour permettre le déplacement du boîtier vers une position déterminée à l'intérieur du réceptacle ;
- les moyens de motorisation comportent un mode retour d'effort dans lequel ils appliquent sur le boîtier une force de rotation opposée au mouvement de rotation déclenché par l'utilisateur, en vue de rappeler le boîtier vers une position neutre ;
- le réceptacle comporte des moyens élastiques de retenue qui coopèrent avec le boîtier pour le retenir élastiquement et de manière amovible dans le réceptacle ;
- les moyens élastiques de retenue comportent au moins une bille montée libre à rotation sur un support agencé dans le réceptacle et sollicitée élastiquement contre le boîtier ;
- le boîtier comporte au moins un commutateur embarqué qui fonctionne indépendamment du positionnement du boîtier dans le réceptacle de manière que, lorsque le boîtier est retiré du réceptacle, l'utilisateur puisse modifier au moins un paramètre de fonctionnement de l'appareil à l'aide dudit commutateur ;
- le commutateur est du type sensitif et le boîtier comporte sur sa surface externe au moins une zone de détection associée au commutateur ;
- le réceptacle est pourvu d'un commutateur à pression susceptible de détecter un mouvement de translation du boîtier vers l'intérieur de l'appareil à la manière d'un poussoir, notamment pour détecter une action de validation d'un paramètre de fonctionnement de l'appareil ;
- au moins une portion de la surface externe du boîtier est de forme hémisphérique ;
- le boîtier comporte une batterie rechargeable et le réceptacle comporte des moyens de raccordement électrique qui permettent le rechargement de la batterie lorsque le boîtier est reçu dans son réceptacle ;

L'invention propose aussi un appareil électroménager comportant une façade pourvue d'une interface de commande selon l'une des caractéristiques précédentes.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue en perspective qui représente schématiquement un lave-linge équipé d'une interface de commande conforme aux enseignements de l'invention ;
- la figure 2 est un bloc-diagramme qui représente schématiquement le lave-linge de la figure 1 ;
- la figure 3 est une vue éclatée en perspective de trois-quarts arrière qui représente les principaux éléments de l'interface de commande de la figure 1 ;
- la figure 4 est une vue de face qui représente le boîtier de l'interface de commande de la figure 1 ;
- la figure 5 est une vue en perspective de trois-quarts arrière qui représente les éléments contenus dans le boîtier de l'interface de commande de la figure 1.

### DESCRIPTION DES MODES DE REALISATION PREFERES

Dans la suite de la description, on utilisera à tire non limitatif une orientation longitudinale, transversale, et verticale suivant le repère L, V, T représenté sur les figures. De plus, des éléments identiques ou similaires pourront être identifiés par les mêmes références.

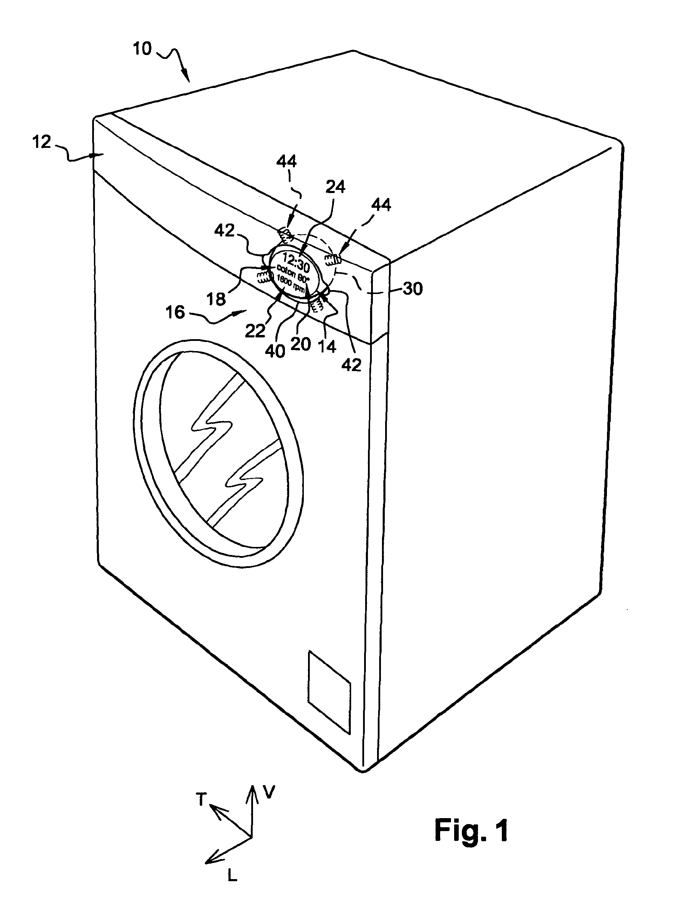

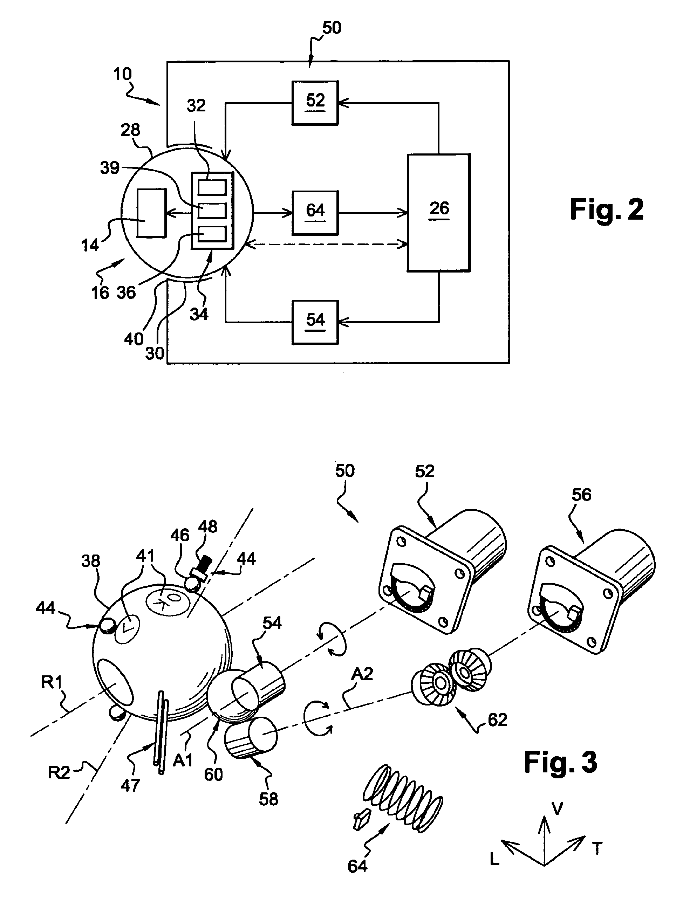

On a représenté sur les figures 1 et 2 un exemple de réalisation d'un appareil électroménager 10 selon l'invention. L'appareil électroménager 10 est constitué ici par un lave-linge qui comporte à l'avant une façade 12 munie d'un écran d'affichage 14 et d'une interface de commande manuelle 16.

L'écran d'affichage 14 est prévu pour afficher des informations relatives au fonctionnement de l'appareil 10. Dans l'exemple représenté, l'écran 14 affiche le programme de lavage 18, la température de lavage 20, la vitesse d'essorage 22, et l'heure 24.

L'interface de commande 16 est prévue pour permettre à un utilisateur de commander manuellement des fonctions de l'appareil 10, en particulier de sélectionner des paramètres de fonctionnement tels que le programme de lavage 18, la température de lavage 20... L'interface de commande 16 comporte un circuit électronique de commande 26 agencé dans l'appareil 10 pour agir sur les paramètres de fonctionnement de l'appareil 10.

Conformément aux enseignements de l'invention, l'interface de commande 16 comprend un boîtier 28 qui est monté mobile, dans un réceptacle 30 formé dans la façade 12, suivant au moins une direction privilégiée, de manière à former un organe de commande de l'appareil 10. De plus, le boîtier 28 est monté de manière amovible dans le réceptacle 30 et l'écran d'affichage 14 est agencé dans le boîtier 28.

L'interface de commande 16 comprend aussi un dispositif de détection 32 qui est prévu pour détecter un mouvement du boîtier 28 dans son réceptacle 30 suivant la direction privilégiée et produire un signal représentatif de ce mouvement, ce signal étant traduit par le circuit électronique de commande 26 en une instruction de commande d'une fonction de l'appareil 10. Le dispositif de détection 32 est constitué ici par des accéléromètres qui sont montés sur un circuit électronique embarqué 34 agencé dans le boîtier 28.

Avantageusement, le boîtier 28 comporte aussi des moyens de communication à distance 36, qui sont agencés sur le circuit électronique embarqué 34, et qui permettent au circuit électronique embarqué 34 de communiquer à distance avec le circuit électronique de commande 26 de l'appareil 10.

Le circuit électronique embarqué 34 contrôle les éléments électroniques embarqués dans le boîtier 28 tel que l'écran 14. Ainsi, lorsque le boîtier 28 est retiré de la façade 12, l'écran 14 peut continuer à afficher les informations relatives au fonctionnement de l'appareil 10. De plus, grâce au moyens de communication à distance 36, il n'est pas nécessaire de relier électriquement le circuit électronique embarqué 34 au circuit électronique de commande 26 lorsque le boîtier 28 est monté dans son réceptacle 30.

Selon le mode de réalisation préféré de l'invention, le boîtier 28 a une forme globalement sphérique et comporte une calotte transparente 38 à l'avant, qui rend visible l'écran 14 d'affichage agencé à l'intérieur du boîtier 28.

De préférence, le boîtier 28 comporte des commutateurs embarqués 39 qui fonctionnent indépendamment du positionnement du boîtier 28 dans le réceptacle 30 de manière que, lorsque le boîtier 28 est retiré de la façade 12, l'utilisateur puisse modifier au moins un paramètre de fonctionnement de l'appareil 10 à l'aide des commutateurs embarqués 39.

Les commutateurs embarqués 39 sont ici du type capacitifs. Ils sont raccordés au circuit électronique embarqué 34 et ils sont associés à des zones de détection 41 situées sur la surface extérieure du boîtier 28, globalement sur la partie supérieure du boîtier 28 lorsque l'on regarde l'écran 14 à l'endroit. Les commutateurs embarqués 39 comportent par exemple un commutateur de validation, et deux commutateurs de navigation ou d'incrémentation.

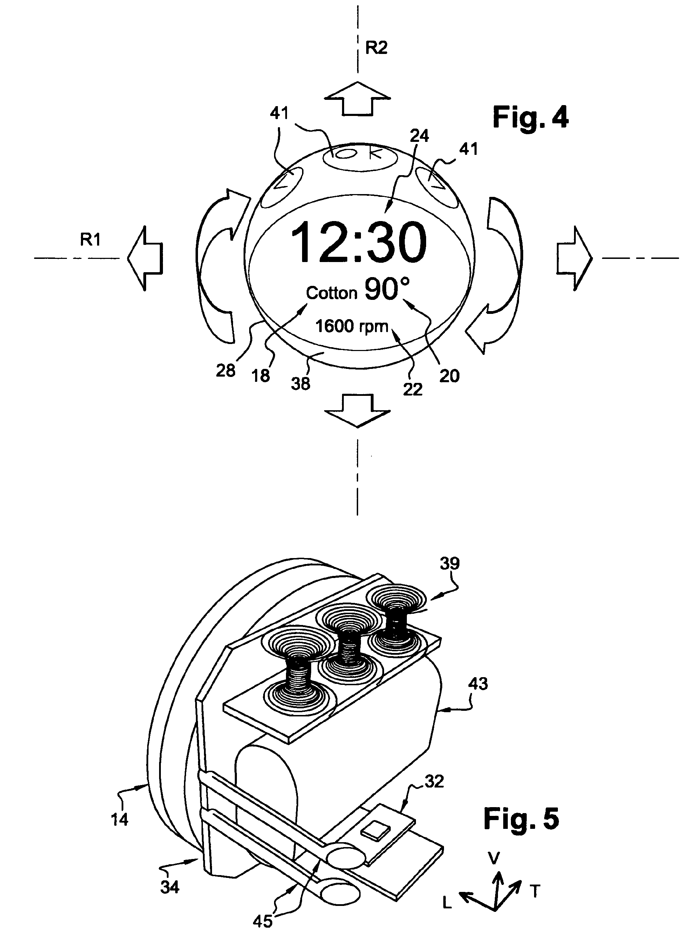

Selon le mode de réalisation représenté en particulier sur les figures 3 et 5, le boîtier 28 contient aussi une batterie 43 rechargeable ainsi que des moyens de branchement électrique 45 prévus pour se raccorder électriquement à des moyens d'alimentation 47 complémentaires agencés dans le réceptacle 30 en vue de permettre le rechargement de la batterie 43 lorsque le boîtier 28 est monté dans le réceptacle 30.

Le réceptacle 30, qui est prévu pour recevoir le boîtier 28 en forme de sphère, comporte ici une ouverture 40 sensiblement circulaire sur la façade 12, de rayon légèrement supérieur au rayon du boîtier 28 pour permettre l'introduction du boîtier 28 par l'avant de la façade 12. Lorsqu'il est reçu dans le réceptacle 30, une partie avant du boîtier 28, ici la calotte transparente 38, s'étend à l'extérieur du réceptacle 30. L'ouverture 40 comporte ici deux encoches latérales 42, diamétralement opposées, qui permettent à un utilisateur d'introduire l'extrémité de deux doigts et saisir le boîtier 28 pour le retirer du réceptacle 30.

A l'intérieur du réceptacle 30 sont agencés des moyens élastiques de retenue 44 en vue de retenir le boîtier 28 dans le réceptacle 30 de manière amovible. Les moyens élastiques de retenue 44, qui sont représentés sur la figure 3, comportent ici quatre billes 46 réparties sur le pourtour du boîtier 28 et sollicitées élastiquement contre le boîtier 28 par des ressorts 48. Les billes 46 sont par exemple montées libre à rotation dans des logements appropriés (non représentés) et retenues dans ces logements. Lors de l'introduction du boîtier 28 dans le réceptacle 30, et lors du retrait du boîtier 28, les billes 46 coulissent dans leurs logements à l'encontre de l'effort de rappel des ressorts 48 jusqu'à permettre le passage du boîtier 28 qui glisse contre les billes 46.

Grâce à sa forme sphérique et grâce au réceptacle 30 adapté, le boîtier 28 est monté libre à rotation dans le réceptacle 30.

De préférence, le réceptacle 30 comporte des moyens de motorisation 50 du boitier 28 qui sont commandés par le circuit électronique de commande 26 pour permettre le déplacement du boîtier 28 vers une position déterminée à l'intérieur du réceptacle 30. Les moyens de motorisation 50 visent aussi à contraindre le boîtier 28 à ne pivoter qu'autour de deux axes de rotation R1, R2 orthogonaux passant globalement par le centre de la sphère. Ces axes de rotation R1, R2 constituent les directions privilégiées de déplacement du boîtier 28 dans le réceptacle 30.

Les moyens de motorisations 50 comportent ici un premier moteur électrique 52 qui entraîne en rotation un premier galet 54 autour d'un premier axe de rotation A1 sensiblement transversal et un second moteur électrique 56 qui entraîne en rotation un second galet 58 autour d'un second axe de rotation A2 sensiblement orthogonal au premier axe A1. Le premier 54 et le second 56 galets sont en contact de frottement avec une boule de transmission 60 qui elle-même est en contact de frottement avec le boîtier 28 lorsque celui-ci est reçu dans le réceptacle 30. Ainsi, l'entraînement en rotation du premier galet 54 autour de son axe A1 provoque une rotation de la boule de transmission 60 autour d'un axe parallèle au premier axe A1, et la rotation de la boule de transmission 60 entraîne en rotation le boîtier 28 autour d'un axe primaire R1 parallèle au premier axe A1. De manière similaire, l'entraînement en rotation du second galet 58 autour de son axe A2 provoque, via la boule de transmission 60, la rotation du boîtier 28 autour d'un axe secondaire R2 coplanaire au second axe A2 et donc orthogonal à l'axe primaire R1.

Selon le mode de réalisation représenté, le second moteur 56 entraîne le second galet 58 via des engrenages intermédiaires 62.

Avantageusement, chaque moteur 52, 56 est équipé d'un encodeur qui permet au circuit de commande 26 de mesurer indirectement les mouvements de rotation du boîtier 28 autour de l'axe primaire R1 et de l'axe secondaire R2 et déterminer ainsi la position du boîtier 28 dans le réceptacle 30.

L'interface de commande 16 selon l'invention est prévue pour que le boîtier 28 puisse être rappelé vers une position neutre déterminée correspondant à la position représentée sur les figures 1 et 3. Dans cette position neutre, l'écran 14 est visible depuis l'extérieur du réceptacle 30 et les éléments affichés sur l'écran 14 sont lisibles sans qu'il soit nécessaire d'incliner la tête en regardant la façade 12 de l'appareil 10.

A cet effet, les moyens de motorisation 50 comportent un mode de fonctionnement à retour d'effort dans lequel les moteurs 52, 56 sont commandés de manière à appliquer sur le boîtier 28 une force de rotation opposée à un mouvement de rotation déclenché par l'utilisateur, en vue de rappeler le boîtier 28 vers la position neutre.

Selon le mode de réalisation représenté, le réceptacle 30 comporte un commutateur à pression 64 susceptible de détecter un mouvement longitudinal de translation du boîtier 28, depuis sa position neutre vers l'intérieur de l'appareil 10, à la manière d'un bouton poussoir. Ainsi, en exerçant une pression sur le boîtier 28 dirigée globalement longitudinalement vers l'arrière, par rapport à la façade 12, l'utilisateur déclenche un signal de commande qui est transmis au circuit de commande 26 et qui peut être traduit comme une action de validation d'un choix de paramètre.

Selon un exemple de mise en oeuvre de l'invention, l'ensemble formé par la boule de transmission 60, les galets 54, 58, les roues dentées 62, et les moteurs 52, 56, est monté sur un chariot (non représenté) qui pivote autour d'un axe proche de la verticale et éloigné du boîtier 28, de manière à obtenir un mouvement proche d'une translation à l'arrière du boîtier 28. En poussant le boîtier 28, le chariot se déplace et vient activer le commutateur à pression 64 solidaire de la façade 12.

On décrit maintenant le fonctionnement de l'interface de commande 16 selon l'invention lorsque le boîtier 28 est monté dans son réceptacle 30, à partir de sa position neutre, en considérant notamment la figure 4.

Pour activer une fonction ou valider le choix d'un paramètre de fonctionnement de l'appareil 10, l'utilisateur exerce une pression sur le boîtier 28 pour agir sur le commutateur à pression 64.

Pour sélectionner/modifier des paramètres de fonctionnement et/ou pour se déplacer dans des menus qui sont affichés sur l'écran 14, l'utilisateur agit manuellement par impulsions sur le boîtier 28 en le faisant pivoter sélectivement de quelques degrés autour de son axe de rotation primaire R1 ou autour de son axe de rotation secondaire R2. Chaque impulsion sur le boîtier 28 est contrebalancée par un retour d'effort exercé par les moteurs 52, 54 qui provoquent le retour du boîtier 28 dans sa position neutre.

Chaque impulsion de rotation autour de l'axe primaire R1 est détectée par les accéléromètres 32 et traduite en un premier signal de commande S1 transmis au circuit de commande 26. De même, chaque impulsion de rotation autour de l'axe secondaire R2 est détectée par les accéléromètres 32 et traduite en un second signal de commande S2. Ainsi, le fonctionnement de l'interface de commande correspond globalement au fonctionnement d'une manette de type joystick, le rôle de la manette étant tenu par le boîtier 28 qui pivote dans le réceptacle 30.

Les accéléromètres 32 permettent aussi au circuit de commande 26 de contrôler les moyens de motorisation 50 de manière à rappeler précisément le boîtier 28 dans sa position neutre.

On note que les axes primaire R1 et secondaire R2 de rotation constituent ici les directions de déplacement privilégiées suivant lesquelles le boîtier 28 est déplacé de manière à produire des signaux représentatifs de ces mouvements qui sont ensuite traduits en des instructions de commande.

Lorsque le boîtier 28 est retiré du réceptacle 30, l'utilisateur peut continuer à commander l'appareil 10 en agissant soit sur les commutateurs embarqués 39, soit en faisant pivoter le boîtier 28 autour de son axe primaire R1 ou de son axe secondaire R2, ce qui est traduit par les accéléromètres 32 en des signaux de commande SI, S2.

L'interface de commande 16 selon l'invention présente notamment l'avantage d'être entièrement programmable et de disposer d'un grand nombre de mouvements possibles pour générer des signaux de commande. Grâce à l'interface de commande 16 selon l'invention, il est notamment possible d'utiliser le même boîtier 28 pour commander des appareils distincts possédant chacun leur propre réceptacle adapté pour recevoir le boîtier 28. Ainsi, à une configuration appropriée des circuits de commande des différents appareils et grâce à une programmation appropriée des unités électronique de commande équipant ces circuits, le même boîtier peut servir à commander un lave-linge, un lave-vaisselle, un four.

## Revendications

1. Interface de commande manuelle (16) prévue pour permettre à un utilisateur de commander manuellement les fonctions d'un appareil (10), en particulier un appareil électroménager, l'interface (16) comportant un circuit électronique de commande (26) et un écran d'affichage (14) prévu pour afficher des informations relatives au fonctionnement de l'appareil (10), **caractérisée en ce que** :
- l'interface de commande (16) comprend un boîtier (28) qui est monté mobile sur un support (12), suivant au moins une direction privilégiée (R1, R2), et qui est reçu dans un réceptacle (30) du support, de manière que le boîtier (28) constitue un organe de commande manuelle de l'appareil (10),
- l'interface de commande (16) comprend un dispositif électronique de détection (32, 50) qui est prévu pour détecter un mouvement du boîtier (28) dans son réceptacle (30) suivant la direction privilégiée (R1, R2) et produire un premier signal représentatif de ce mouvement, ce premier signal étant traduit par le circuit électronique de commande (26) en une instruction de commande d'une fonction de l'appareil (10),
- l'écran d'affichage (14) est agencé dans le boîtier (28),
- le boîtier (28) est monté de manière amovible dans le réceptacle (30) et le boîtier (28) comporte des moyens de communication à distance (36) avec le circuit électronique de commande (26) de manière que, lorsque le boîtier (28) est retiré du réceptacle (30), l'écran (14) puisse continuer à afficher les informations relatives au fonctionnement de l'appareil (10).

2. Interface (16) selon la revendication précédente, **caractérisée en ce que** le boîtier (28) comporte au moins un accéléromètre (32) qui est prévu pour produire un signal de commande déterminé lorsqu'il détecte un mouvement du boîtier (28) dans une direction déterminée.

3. Interface (16) selon l'une quelconque des revendications précédentes, **caractérisée en ce que** le boîtier (28) est monté libre en rotation dans son réceptacle (30), et **en ce qu'**il est prévu un premier dispositif de détection (32, 52) produisant un premier signal qui est fonction du mouvement de rotation du boîtier (28) dans le réceptacle (30) autour d'un premier axe de rotation (R1).

4. Interface (16) selon la revendication précédente, **caractérisée en ce qu'**il est prévu un second dispositif de détection (32, 54) produisant un second signal qui est fonction du mouvement de rotation du boîtier (28) dans le réceptacle (30) autour d'un second axe de rotation (R2) sensiblement orthogonal au premier axe de rotation (R1).

5. Interface (16) selon l'une quelconque des revendications précédentes, **caractérisée en ce que** l'interface (16) comporte des moyens de motorisation (50) du boitier (28) qui sont commandés par le circuit électronique de commande (26) pour permettre le déplacement du boîtier (28) vers une position déterminée à l'intérieur du réceptacle (30).

6. Interface (16) selon la revendication précédente prise en combinaison avec les revendications 3 ou 4, **caractérisée en ce que** les moyens de motorisation (50) comportent un mode retour d'effort dans lequel ils appliquent sur le boîtier (28) une force de rotation opposée au mouvement de rotation déclenché par l'utilisateur, en vue de rappeler le boîtier (28) vers une position neutre.

7. Interface (10) selon l'une quelconque des revendications précédentes, **caractérisée en ce que** le réceptacle (30) comporte des moyens élastiques de retenue (44) qui coopèrent avec le boîtier (28) pour le retenir élastiquement et de manière amovible dans le réceptacle (30).

8. Interface (10) selon la revendication précédente, **caractérisée en ce que** les moyens élastiques de retenue (44) comportent au moins une bille (46) montée libre à rotation sur un support agencé dans le réceptacle (30) et sollicitée élastiquement contre le boîtier (28).

9. Interface (10) selon l'une quelconque des revendications précédentes, **caractérisée en ce que** le boîtier (28) comporte au moins un commutateur embarqué (39) qui fonctionne indépendamment du positionnement du boîtier (28) dans le réceptacle (30) de manière que, lorsque le boîtier (28) est retiré du réceptacle (30), l'utilisateur puisse modifier au moins un paramètre de fonctionnement de l'appareil (10) à l'aide dudit commutateur (39).

10. Interface (16) selon la revendication précédente, **caractérisée en ce que** le commutateur (39) est du type sensitif et **en ce que** le boîtier (28) comporte sur sa surface externe au moins une zone de détection (41) associée au commutateur (39).

11. Interface (16) selon l'une quelconque des revendications précédentes, **caractérisée en ce que** le réceptacle (30) est pourvu d'un commutateur à pression (64) susceptible de détecter un mouvement de translation du boîtier (28) vers l'intérieur de l'appareil (10) à la manière d'un poussoir, notamment pour détecter une action de validation d'un paramètre de fonctionnement de l'appareil (10).

12. Interface (16) selon l'une quelconque des revendications précédentes, **caractérisée en ce qu'**au moins une portion de la surface externe du boîtier (28) est de forme hémisphérique.

13. Interface (16) selon l'une quelconque des revendications précédentes, **caractérisé en ce que** le boîtier (28) comporte une batterie (43) rechargeable et le réceptacle (30) comporte des moyens de raccordement électrique (47) qui permettent le rechargement de la batterie (43) lorsque le boîtier (28) est reçu dans son réceptacle (30).

14. Appareil électroménager (10) comportant une façade (12) pourvue d'une interface de commande (16) selon l'une quelconque des revendications précédentes.

## Patentansprüche

1. Manuelle Steuerschnittstelle (16), die dazu vorgesehen ist, einem Benutzer zu gestatten, die Funktionen eines Geräts (10), insbesondere eines Elektrohaushaltsgeräts, manuell zu steuern, wobei die Schnittstelle (16) eine elektronische Steuerschaltung (26) und einen Anzeigebildschirm (14) aufweist, der dazu vorgesehen ist, Informationen über den Betrieb des Geräts (10) anzuzeigen, **dadurch gekennzeichnet, dass**:
- die Steuerschnittstelle (16) ein Gehäuse (28) aufweist, das an einem Träger (12) in zumindest einer bevorzugten Richtung (R1, R2) beweglich gelagert ist und in einer Aufnahmemulde (30) des Trägers so aufgenommen ist, dass das Gehäuse (28) ein manuelles Steuerglied für das Gerät (10) bildet,
- die Steuerschnittstelle (16) eine elektronische Erfassungsvorrichtung (32, 50) aufweist, die dazu vorgesehen ist, eine Bewegung des Gehäuses (28) in seiner Aufnahmemulde (30) in der bevorzugten Richtung (R1, R2) zu erfassen und ein für diese Bewegung repräsentatives erstes Signal zu erzeugen, wobei dieses erste Signal von der elektronischen Steuerschaltung (26) in eine Steueranweisung zum Steuern einer Funktion des Geräts (10) übertragen wird,
- der Anzeigebildschirm (14) in dem Gehäuse (28) angeordnet ist,
- das Gehäuse (28) abnehmbar in der Aufnahmemulde (30) gelagert ist und das Gehäuse (28) Fernkommunikationsmittel (36) zur Fernkommunikation mit der elektronischen Steuerschaltung (26) aufweist, so dass dann, wenn das Gehäuse (28) von der Aufnahmemulde (30) abgenommen ist, der Bildschirm (14) weiterhin die Informationen über den Betrieb des Geräts (10) anzeigen kann.

2. Schnittstelle (16) nach dem vorangehenden Anspruch, **dadurch gekennzeichnet, dass** das Gehäuse (28) zumindest einen Beschleunigungsmesser (32) aufweist, der dazu vorgesehen ist, ein bestimmtes Steuersignal zu erzeugen, wenn er eine Bewegung des Gehäuses (28) in einer bestimmten Richtung erfasst.

3. Schnittstelle (16) nach einem der vorangehenden Ansprüche, **dadurch gekennzeichnet, dass** das Gehäuse (28) in seiner Aufnahmemulde (30) frei drehbar gelagert ist und dass eine erste Erfassungsvorrichtung (32, 52) vorgesehen ist, die ein erstes Signal erzeugt, das Funktion von der Drehbewegung des Gehäuses (28) in der Aufnahmemulde (30) um eine erste Drehachse (R1) herum ist.

4. Schnittstelle (16) nach dem vorangehenden Anspruch, **dadurch gekennzeichnet, dass** eine zweite Erfassungsvorrichtung (32, 54) vorgesehen ist, die ein zweites Signal erzeugt, das Funktion von der Drehbewegung des Gehäuses (28) in der Aufnahmemulde (30) um eine zweite Drehachse (R2) herum ist, die im Wesentlichen orthogonal zur ersten Drehachse (R1) verläuft.

5. Schnittstelle (16) nach einem der vorangehenden Ansprüche, **dadurch gekennzeichnet, dass** die Schnittstelle (16) Antriebsmittel (50) zum Antrieb des Gehäuses (28) aufweist, die über die elektronische Steuerschaltung (26) gesteuert werden, um die Verlagerung des Gehäuses (28) zu einer bestimmten Stellung innerhalb der Aufnahmemulde (30) hin zu gestatten.

6. Schnittstelle (16) nach dem vorangehenden Anspruch in Kombination mit den Ansprüchen 3 oder 4, **dadurch gekennzeichnet, dass** die Antriebsmittel (50) einen Kraftumkehrmodus aufweisen, in welchem sie auf das Gehäuse (28) eine Drehkraft aufbringen, die der durch den Benutzer ausgelösten Drehbewegung entgegengesetzt ist, um das Gehäuse (28) in eine neutrale Stellung zurückzuführen.

7. Schnittstelle (10) nach einem der vorangehenden Ansprüche, **dadurch gekennzeichnet, dass** die Aufnahmemulde (30) elastische Haltemittel (44) aufweist, die mit dem Gehäuse (28) zusammenwirken, um es elastisch und abnehmbar in der Aufnahmemulde (30) zu halten.

8. Schnittstelle (10) nach dem vorangehenden Anspruch, **dadurch gekennzeichnet, dass** die elastischen Haltemittel (44) zumindest eine Kugel (46) aufweisen, die an einem in der Aufnahmemulde (30) angeordneten Träger frei drehbar gelagert ist und elastisch gegen das Gehäuse (28) beaufschlagt wird.

9. Schnittstelle (10) nach einem der vorangehenden Ansprüche, **dadurch gekennzeichnet, dass** das Gehäuse (28) zumindest einen mitgeführten Schalter (39) aufweist, der unabhängig von der Positionierung des Gehäuses (28) in der Aufnahmemulde (30) arbeitet, so dass dann, wenn das Gehäuse (28) von der Aufnahmemulde (30) abgenommen ist, der Benutzer zumindest einen Betriebsparameter des Geräts (10) mit Hilfe des Schalters (39) ändern kann.

10. Schnittstelle (16) nach dem vorangehenden Anspruch, **dadurch gekennzeichnet, dass** der Schalter (39) sensitiv ausgeführt ist und dass das Gehäuse (28) an seiner Außenfläche zumindest einen Erfassungsbereich (41) aufweist, der dem Schalter (39) zugeordnet ist.

11. Schnittstelle (16) nach einem der vorangehenden Ansprüche, **dadurch gekennzeichnet, dass** die Aufnahmemulde (30) mit einem Druckschalter (64) versehen ist, der eine Verschiebebewegung des Gehäuses (28) zum Inneren des Geräts (10) hin nach Art eines Stößels erfassen kann, insbesondere um eine Betätigung zum Validieren eines Betriebsparameters des Geräts (10) zu erfassen.

12. Schnittstelle (16) nach einem der vorangehenden Ansprüche, **dadurch gekennzeichnet, dass** zumindest ein Abschnitt der Außenfläche des Gehäuses (28) halbkugelförmig ist.

13. Schnittstelle (16) nach einem der vorangehenden Ansprüche, **dadurch gekennzeichnet, dass** das Gehäuse (28) eine wiederaufladbare Batterie (43) aufweist und die Aufnahmemulde (30) elektrische Anschlussmittel (47) aufweist, die das Wiederaufladen der Batterie (43) gestatten, wenn das Gehäuse (28) in seiner Aufnahmemulde (30) aufgenommen ist.

14. Elektrohaushaltsgerät (10) mit einer Frontfläche (12), die mit einer Steuerschnittstelle (16) nach einem der vorangehenden Ansprüche versehen ist.

## Claims

1. Manual control interface (16) provided to allow a user to manually control the functions of an apparatus (10), in particular a domestic electrical apparatus, the interface (16) including an electronic control circuit (26) and a display screen (14) provided to display information relating to the operation of the apparatus (10), **characterised by** the fact that:
- the control interface (16) comprises a case (28) which is mounted movably on a support (12), in at least one special direction (R1, R2), and which is received in a container (30) of the support, so that the case (28) forms a manual control organ of the apparatus (10),
- the control interface (16) comprises an electronic detection device (32, 50) which is provided to detect a movement of the case (28) in its container (30) in the special direction (R1, R2) and produce a first signal representing this movement, this first signal being translated by the electronic control circuit (26) into an instruction for control of a function of the apparatus (10),
- the display screen (14) is arranged in the case (28),
- the case (28) is mounted removably in the container (30) and the case (28) includes remote communication means (36) with the electronic control circuit (26) so that, when the case (28) is withdrawn from the container (30), the screen (14) can continue to display the information relating to the operation of the apparatus (10).

2. Interface (16) as described in the preceding claim, **characterised by** the fact that the case (28) includes at least one accelerometer (32) which is provided to produce a determined control signal when it detects a movement of the case (28) in a determined direction.

3. Interface (16) as described in any one of the preceding claims, **characterised by** the fact that the case (28) is mounted free in rotation in its container (30), and by the fact that a first detection device (32, 52) is provided producing a first signal which is a function of the rotational movement of the case (28) in the container (30) about a first axis of rotation (R1) .

4. Interface (16) as described in the preceding claim, **characterised by** the fact that a second detection device (32, 54) is provided producing a second signal which is a function of the rotational movement of the case (28) in the container (30) about a second axis of rotation (R2) substantially perpendicular to the first axis of rotation (R1).

5. Interface (16) as described in any one of the preceding claims, **characterised by** the fact that the interface (16) includes means (50) for motorisation of the case (28) which are controlled by the electronic control circuit (26) to allow the displacement of the case (28) towards a determined position inside the container (30).

6. Interface (16) as described in the preceding claim taken in combination with claims 3 or 4, **characterised by** the fact that the means for motorisation (50) include a force return mode in which they apply to the case (28) a rotational force opposed to the rotational movement initiated by the user, in order to return the case (28) towards a neutral position.

7. Interface (10) as described in any one of the preceding claims, **characterised by** the fact that the container (30) includes elastic retaining means (44) which cooperate with the case (28) to elastically and removably retain it in the container (30).

8. Interface (10) as described in the preceding claim, **characterised by** the fact that the elastic retaining means (44) include at least one ball (46) mounted free in rotation on a support arranged in the container (30) and elastically biased against the case (28).

9. Interface (10) as described in any one of the preceding claims, **characterised by** the fact that the case (28) includes at least one on-board switch (39) which operates independently of the positioning of the case (28) in the container (30) so that, when the case (28) is withdrawn from the container (30), the user can modify at least one operating parameter of the apparatus (10) by means of the said switch (39).

10. Interface (16) as described in the preceding claim, **characterised by** the fact that the switch (39) is of the sensitive type and by the fact that the case (28) includes on its outer surface at least one detection zone (41) associated with the switch (39).

11. Interface (16) as described in any one of the preceding claims, **characterised by** the fact that the container (30) is provided with a pressure switch (64) able to detect a movement of translation of the case (28) towards the inside of the apparatus (10) in the manner of a push-button, in particular to detect an action of validation of an operating parameter of the apparatus (10).

12. Interface (16) as described in any one of the preceding claims, **characterised by** the fact that at least a portion of the outer surface of the case (28) is of hemispherical form.

13. Interface (16) as described in any one of the preceding claims, **characterised by** the fact that the case (28) includes a rechargeable battery (43) and the container (30) includes electrical connection means (47) which permit the recharging of the battery (43) when the case (28) is received in its container (30).

14. Domestic electrical apparatus (10) including a fascia (12) provided with a control interface (16) as described in any one of the preceding claims.
